# EUROPEAN PATENT APPLICATION

(11) **EP 1 890 283 A1**
(43) Date of publication of application: **20.02.2008**
(21) Application number: 07113402.7
(22) Date of filing: 30.07.2007
(51) Int. Cl.: G10L 17/00, H04M 3/523

(54) **System and method for selecting a preferred method of executing a process of a customer communication**

(30) Priority: 16.08.2006 US 504652
(71) Applicant: Teambook2 Ltd, 42505 Nataniya (IL)
(72) Inventor: Halevy, Yechiam, 42850, Eroteim (IL); Weissman, Michal, 46541, Herzelia (IL)
(74) Representative: Harrison Goddard Foote

(57) **Abstract**

A system and method of sensing a characteristic of a customer communication over an electronic medium (200); storing methods of executing a process in the customer communication wherein the characteristic is detected (202), selecting a preferred method for executing the process (204) and directing the process be executed in accordance with the preferred method (206).

## Description

### BACKGROUND OF THE INVENTION

Facilities such as customer call centers provide services that include a mix of automated processes and manual inputs. For example, providing service to a customer who calls for example a service center can be deemed a process that may include automated stages such as those provided by an automated, self-service speech based system, and manual stages, such as having a live operator discuss a benefit of a particular product with a potential customer. A decision as to which stages of a process are best to automate, and which stages are best to perform manually, is frequently left to a manager who makes such decisions based on his own personal experience rather than on empiric evidence or analysis.

### SUMMARY OF INVENTION

A system in some embodiments of the invention includes one or more sensors to sense a characteristic of a customer communication, where the communication is over an electronic medium, a memory to store more than one method of executing a process of handling or executing the customer communication, where the communication has such sensed characteristic, and a processor to select a preferred method from among the more than one method; and to direct an execution of the process using the preferred method. In some embodiments, a system may select characteristics such as for example an identity of a caller on the customer communication, a gender of the caller, an emotion of the caller, a time of a call of the communication, a location of the caller, a request of the caller, an age of the caller, a preferred language of the caller, an accent of the caller, and an urgency of the caller. In some embodiments, the processor may record a first value of a parameter of the process when the process is executed using a first method, and record a second value for the parameter in a second call where the process is executed using a second method. The method may compare the first value to the second value; and designate as the preferred method the method having a most favoured value of such parameter.

In some embodiments, the processor may direct executions of the process using the preferred method until a third method achieves a value of the parameter more favourable than the value achieved using either the first method or the second method.

In some embodiments, a first method may include an action method performed by a person, and a second method may include an action performed by a machine.

In some embodiments, the processor may direct the customer communication to a machine for an execution of a first process and to a person for an execution of a second process.

In some embodiments, a processor may detect that the process includes more than one sub-process, and the processor may identify a sub-process, select a preferred method of performing the sub-process from among more than one possible methods of performing the sub-process, and may direct an execution of the sub-process using the preferred method of performing the sub-process.

In some embodiments, the processor may select the preferred method of performing a process based on a parameter such as a cost of a transaction of the customer communication, a success rate of a transaction in the customer communication, a satisfaction of a customer in the communication, and an effectiveness of imparting data to the customer.

In some embodiments, the invention may include a memory to store preferences for a response to a customer communication; and a processor to transfer a customer communication from an automated response mode to a manual response mode when the process detects a signal that the manual response mode best complies with a preference of such preferences, and to transfer the customer communication from the automated response mode to a manual response mode when the automated response mode complies with a preference for the communication.

In some embodiments, the processor is to record data collected in an automated response mode of the customer communication, and to present the collected data to a manual operator.

In some embodiments, the processor may collect a preference of the customer during the customer communication session.

In some embodiments, a customer in a communication may be identified on the basis of for example a caller ID of the customer, a voice of the customer, a spoken name of the customer, and a password of the customer.

In some embodiments, a trigger or signal to transfer a call from one mode to another mode may include a voice tone of the customer, a repeated use of a word by the customer during the communication, and a volume of a voice of the customer during the communication.

### BRIEF DESCRIPTION OF THE FIGURES

The subject matter regarded as the invention is particularly pointed out and distinctly claimed in the concluding portion of the specification. The invention, however, both as to organization and method of operation, together with features and advantages thereof, may best be understood by reference to the following detailed description when read with the accompanied drawings in which:
Fig. 1 is a schematic diagram of a system that may execute a process that includes automated stages and manual stages, in accordance with an embodiment of the invention; and
Fig. 2 is a flow diagram of a method in accordance with an embodiment of the invention.

It will be appreciated that for simplicity and clarity of illustration, elements shown in the figures have not necessarily been drawn to scale. For example, the dimensions of some of the elements may be exaggerated relative to other elements for clarity. Further, where considered appropriate, reference numerals may be repeated among the figures to indicate corresponding or analogous elements.

### DETAILED DESCRIPTION OF THE INVENTION

In the following description, various embodiments of the invention will be described. For purposes of explanation, specific examples are set forth in order to provide a thorough understanding of at least one embodiment of the invention. However, it will also be apparent to one skilled in the art that other embodiments of the invention are not limited to the examples described herein. Furthermore, well-known features may be omitted or simplified in order not to obscure embodiments of the invention described herein.

Unless specifically stated otherwise, as apparent from the following discussions, it is appreciated that throughout the specification, discussions utilizing terms such as "selecting," "processing," "computing," "calculating," "determining," or the like, may refer to the actions and/or processes of a computer, computer processor or computing system, or similar electronic computing device, that may manipulate and/or transform data represented as physical, such as electronic, quantities within the computing system's registers and/or memories into other data similarly represented as physical quantities within the computing system's memories, registers or other such information storage, transmission or display devices. In some embodiments processing, computing, calculating, determining, and other data manipulations may be performed by one or more processors that may in some embodiments be linked.

The processes and functions presented herein are not inherently related to any particular computer, imager, network or other apparatus. Embodiments of the invention described herein are not described with reference to any particular programming language, machine code, etc. It will be appreciated that a variety of programming languages, network systems, protocols or hardware configurations may be used to implement the teachings of the embodiments of the invention as described herein.

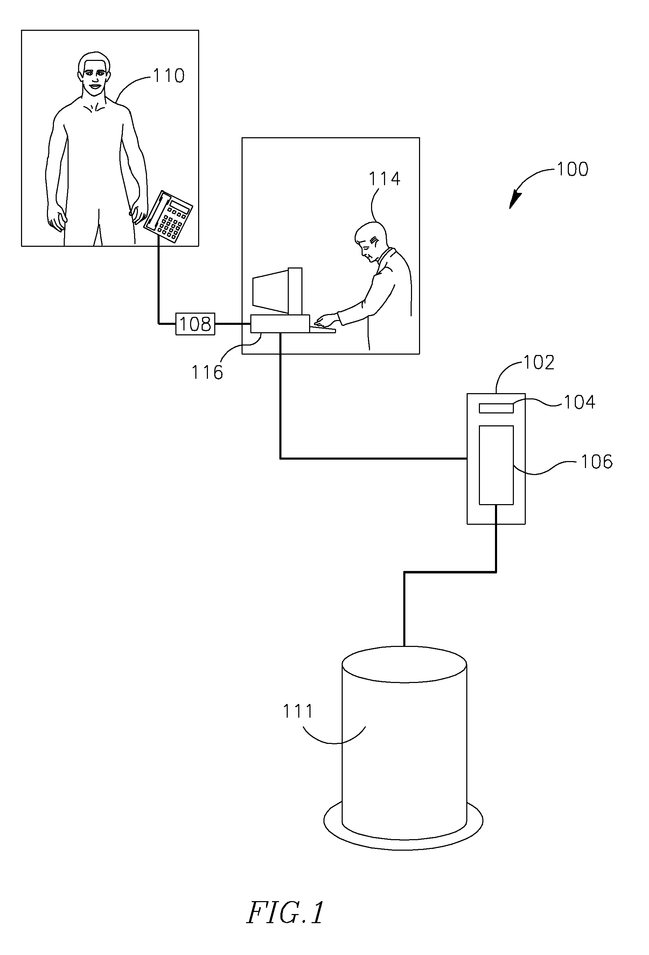

Reference is made to Fig. 1, a schematic diagram of a system that may execute a process that includes automated stages and manual stages, in accordance with an embodiment of the invention. In some embodiments, a system 100 may include a computer system 102 that may include a processor 104 such as for example a central processing unit or other processor, a memory 106 such as for example a disc drive, magnetic storage device or other mass data storage component that may be configured to include a data base 111 or other structured or unstructured collection of data. System 100 may include a communication system 108 that may accept or handle incoming or outgoing communications over electronic media such as for example telephone calls, email or other messages, video conferences or other electronic communication media. In some embodiments, a call or other communication may be initiated by or to for example a customer 110, user or potential customer or user. In some embodiments processor 104 or another electronic monitor may monitor and collect data about the communication between the system 100 and customer 110.

In some embodiments, system 100 may be manned or monitored by for example an operator person 114 who may manually operate or perform some of the stages or routines that are part of a customer communication. Other stages or routines that may be part of the customer communication may be performed or directed by for example processor 104 or by a component that may be linked to processor 104.

In some embodiments, memory 106 may store instructions and/or methods that may describe various suitable ways of performing some or all of the processes that may be typically part of a customer communication. For example, memory 106 or another storage component may include instructions or a list of various ways or methods to accept data from a customer, such as for example customer identification data. Such a list may include for example (i) acceptance of such data by the operator person 114, (ii) requesting the customer to input identification data from a telephone key pad, (iii) identifying a customer from a caller-ID signal, or (iv) identifying a customer by way of a sensor 116 such as for example a voice identification sensor. Other methods may be used.

In some embodiments, processor 104 may direct one or more customer communications to execute a process such as the process of collecting customer identification data in a manual mode such as by way of the operator person 114 collecting such data. Processor 104 may measure one or more parameters of the process in such manual mode. For example, processor 104 may measure the time taken for a process of collecting customer identification data, and the number of customer communications that end in a successful transaction where the customer identification was taken by the operator. Other parameters may be measured. The processor 104 may also direct that other identification data be collected in other calls by way of an automated process such as requesting a customer to input data to a phone key pad, caller-ID or voice pattern recognition, and the processor 104 may collect and record data on the same parameters as were collected using the manual mode. Processor 104 may compare the values of the parameters that were collected from the execution of the process using the various methods, and may determine a preferred method for executing the process. On the basis of such determination, processor 104 may direct that future instances or executions of the process be executed in accordance with the preferred method.

In some embodiments, there may be various or numerous preferred methods of executing a process. For example, processor 104 may determine that customer communications with older people have a higher rate of ending in a successful transaction when identification data is taken by an operator person 114 rather than by way of a customer's phone key pad. Processor 104 may therefore for example use a voice pattern detection sensor to estimate for example an age of a customer caller, and may then direct that identification data from older people be taken in a manual mode by an operator person 114. Similarly, processor 104 may collect data or values of parameters on customer calls that come in late at night, and may find that such calls take longer than day time calls, but also frequently result in purchases of high-end components for electronic games. Processor may direct that late-night calls be handled in a manual mode, and may direct that such calls include offers for such electronic game components. Other parameters and values may be measured and other scenarios or combinations of preferences and methods may be stored in a memory 106.

In some embodiments, several methods of performing a process may be stored in memory 106, and processor 104 may combine some or all of the stored methods and may test, record and compare parameter values that result from such combinations. For example, the process of a customer service call may be broken down or divided into one or more sub-processes. These sub-processes may include for example, (i) identifying the customer, (ii) answering questions of the customer, (iii) taking an order from the customer and (iv) confirming the details of the order. In some embodiments, processor 104 may collect values on one or more parameters of one or more of such sub-processes. For example, values may be collected for parameters such as the time required to complete one or more of the sub-processes, and the success rates of calls when various methods are employed for completing such processes.

In some embodiments, such values may be collected for various combinations of methods of executing the various sub-processes. For example, a success rate of a transaction may be calculated for a call that may meet the following criteria, it is (i) initiated in the early morning hours, (ii) where the caller is a woman, (iii) where identification data is collected using caller-ID, (iv) where an operator makes a proposal to the caller to buy a product, and (iv) an automated process takes the order information and provides confirmation information. Processor 104 may compare the value achieved for the parameter, such as transaction success rates, in light of these methods or combinations of methods employed for the execution of the call process. Processor 104 may compare the values achieved using a predefined criteria, such as cost of the call, success rate for the transaction or others to determine a preferred method or combination of methods for executing the process. Processor 104 may on the basis of the pre-defined criteria direct that early morning calls with women be executed in the preferred combination of methods for the respective sub-processes. Processor 104 may also store the values achieved, the parameters evaluated and other information generated from call for future comparisons.

In some embodiments, processor 104 may determine that one part or sub-process of a call is best handled by a person, while a second part of a call is best handled by an automated process. Processor 104 may automatically switch the call from the person or manual mode to the computerized mode. For example, processor 104 may, by using of a voice pattern sensor, detect the use of key words or recognized tones in a conversation to detect that an order has been finalized by a customer 110 and an operator person 114. At, for example a lull in the conversation, processor 104 may signal operator 110, that the conversation is to be transferred to an automated system, so that the automated system will complete the transaction and provide confirmation details. Processor 104 may switch a call from a computerized mode to an operator mode, or from a manual mode to a computerized mode, more than once during a call or communication session.

In some embodiments, processor 104 may detect a dialect or foreign accent of a caller, or may detect a nervousness, anger, impatience or other emotion during a communication session. Processor 104 may for example, implement a language mode for such call that may for example offer the caller to speak with an operator in the identified language or may implement a language mode as part of the computerized system. Processor 104 may measure a value of implementing a particular language module or of transferring the call to a particular operator, and may compare such value to another method of handling the call such as for example remaining with the original language module. From such comparison, processor 104 may determine that directing a call of a caller with a foreign accent to a particular language mode, may be preferred or beneficial. Processor 104 may adopt a policy that when in the future it detects a conversation with a person having a foreign accent, it switches to a particular language mode or directs the call to an operator who speaks such language.

In some embodiments, processor 104 may receive and/or store instructions describing a new or different method of performing a process. For example, a data base may be added to a system that includes an indication of a seasonality of purchases by a customer, so that the system 100 can correlate the kinds of purchases a particular customer makes at Christmas time, and how close to the holiday the customer makes his purchases. The system 100 may gather a value of a parameter such as a customer transaction success rate for sales call made in the week before Christmas to foreign language speaking customers who have in the past made purchases late at night. The system 100 may measure a transaction success rate of making such calls at various times of day and with various offers. The system 100 may then direct that calls made to last minute purchasers be made at night, or may find other preferred methods for calls to such purchasers. The system 100 may then discard or not implement a past preferred method of executing a process in favour of the newer, more preferable method of performing the process.

In some embodiments, the system 100 may identify a particular caller, and store values of parameters of one or more methods of handling communications with such call that may be customized to such caller, and may evaluate or compare one or more methods of handling calls with such caller to determine a preferred method of handling such calls. In future calls with such caller, processor 104 may direct that the call be executed using the preferred methods.

In some embodiments, processor 104 may monitor one or more customer calls or inquiries to for example an automated information system, and may determine for example that a large number of such calls are bouncing to manned operators because the automated system did not provide the requested information. Instructions for a method that may be stored in for example a memory may monitor the bounced call to find for example a word or request that the bounced calls may have in common. Such common words or requests may indicate that a particular fact or item is not present in the answers provided by the automated system, and that a large number of callers is looking for such data. System 100 may by referencing a list of methods in a memory 106, elect to include the commonly requested data in the data available to the automated system.

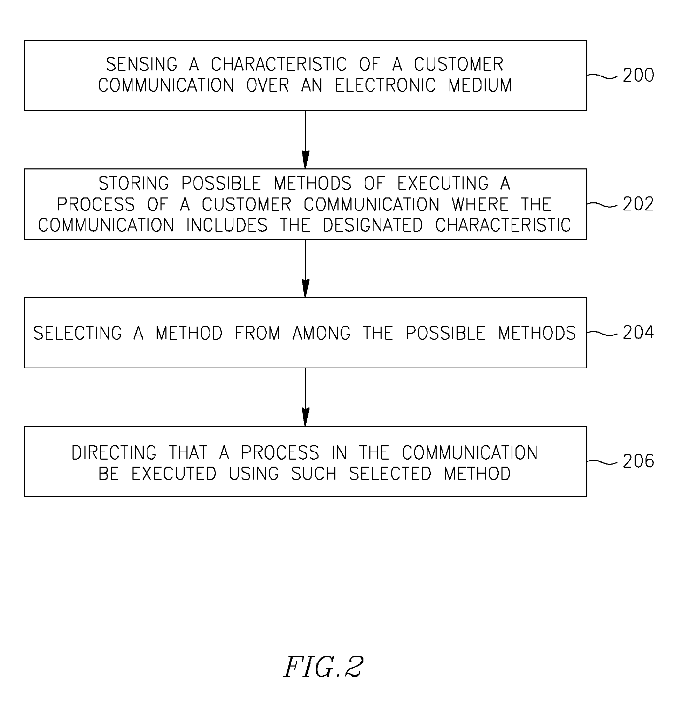

Reference is made to Fig. 2, a flow diagram of a method in accordance with an embodiment of the invention. In some embodiments, and in block 200 a method of the invention may include sensing a characteristic of a customer communication over an electronic medium. Such characteristic may include for example an identity of a caller or of a customer party to the communication, a gender of the caller or party to the communication, an emotion of the caller or party to the communication, a time of the call with the party, a location of the caller party, a type of request of the party, an age of the party, a preferred language of the party, an accent of the party, and a perceived urgency of the party. Other characteristics may be sensed or monitored. In some embodiments, the party may be the caller or may be a party answering a call made from a call centre. For example, a party may be on a receiving end of a call made by for example a call centre, may be a potential customer of a call centre, may be a caller to a police or 911 emergency centre, or may be a customer seeking assistance in paying a bill or getting product information. Other types of callers or parties to an electronic conversation or communication session are possible.

In block 202, a memory may store possible methods or ways of executing or performing a process of a customer communication where the communication has the designated or detected characteristic. For example, a detected characteristic of a communication may include that the other party or customer is a woman. The memory may store three possible methods of handling a call with a woman. Such methods may include having a woman operator handle the call, offering the woman a free perfume bottle, and starting the conversation by talking about children's homework. Other methods are possible.

In block 204, a processor may select a method from among the several possible methods. For example, the processor may detect that the last several calls with women in September had a high success rate when the conversation included a discussion of children's homework habits. The processor may select the method of handling the call to include such a discussion with the caller or customer.

In block 206, the processor may for example direct that an operator execute the call by using such method. For example, a processor may send a message to an operator handling the call, telling the operator to include a discussion about homework as part of the call.

In some embodiments, a method may include monitoring one or more calls to collect results of one or more parameters of the call when one or more methods are used. For example, a parameter such as a success rate of an attempted sale or other process of a call may be measured for several calls where a particular method of handling the call is used. The one or more parameters being measured may be recorded when a first method is used during the call, and when a second method is used during a subsequent call. The value of the recorded parameters may be compared so that a success rate in a call handled by a human operator is compared to a success rate of a call handled by an automated or mechanized operator. Based on the comparison or other criteria, a preferred method may be established as the one yielding the highest success rate in one or more calls. Other processes or parameters are possible.

In some embodiments, a processor may direct that a particular method of for example handling a call be employed in some or all future calls that may have a particular characteristic, and such method may be executed or directed until for example a method yielding an even better value on the measured parameter is discovered, and such new method becomes the preferred method.

In some embodiments, a method may include identifying one or more sub-processes of a larger process that may be part of a call or customer conversation. For example, a process of taking customer identification data may include two sub-processes such as taking a name of the customer and taking an ID or address of the customer, or taking a number of the customer and then reading the number back to the customer to confirm. One or more of these sub-processes may be detected, designated or isolated by for example a processor, and a preferred method of performing or executing the sub-process may be established by for example trying out the methods on one or more calls and measuring a parameter such as a success rate for each such method. A process may direct that future executions of the sub-process be done using the selected method.

In some embodiments, a parameter that may be measured may include a success rate of a transaction in said customer communication, a satisfaction of a customer in said customer communication, an effectiveness of imparting data to said customer.

A method of the invention may include for example storing one or more preferred ways of responding to a communication with a particular customer, and transferring a customer communication from an automated response mode to a manual response mode upon a signal that the manual response mode complies with a preference for the communication, and transferring the call back to an automated response if a signal indicates that the automated mode corresponds to a preference for the communication. For example, in some embodiments, a processor may indicate that an automated operator mode may be preferred for taking a customer's identification data such as name, social security number, etc., but that a manned operator may be preferred for providing information to the customer or trying to sell the customer a particular product or service, and finally that an automated operator mode may be preferred for confirming sales data to the customer once the sale is complete. Such preferences may be indicated by a signal from for example a processor, and upon such signal, a call may be transferred to a manned operator or to an automated operator mode. In some embodiments, data recorded by a manual or automated operator, may be displayed to a manual or automated operator to whom the call is transferred.

In some embodiments, the preferences that are recorded, may be or include for example, preferences of an individual caller or customer for a particular way that his calls are to be handled. For example, a customer may prefer to speak to an operator in a particular language or with a particular operator. In some embodiments, the customer may be identified, and such identification or characteristic may be correlated to a preference as to how the call is to be handled. In some embodiments, a preference of a customer may be collected in the course of for example a first call with a customer, and such preference may be stored and then recalled and implemented in a second call with such customer. In some embodiments, a caller may be identified by for example a caller ID, a voice print, name, a password or otherwise, and a preference of such customer may be stored or correlated with such identifier.

In some embodiments, a signal to change a mode of handling a call or to implement a preference in the middle or at another stage of a call may be triggered by for example a signal from the customer that he wants to talk to a real person instead of a machine, a voice tone of the customer indicating that he is frustrated, a repeated use of a word by the customer during the communication which may also indicate that the customer is frustrated, a volume of a voice of the customer or other signals that may be generated.

Throughout the description and claims of this specification, the words "comprise" and "contain" and variations of the words, for example "comprising" and "comprises", means "including but not limited to", and is not intended to (and does not) exclude other moieties, additives, components, integers or steps.

Throughout the description and claims of this specification, the singular encompasses the plural unless the context otherwise requires. In particular, where the indefinite article is used, the specification is to be understood as contemplating plurality as well as singularity, unless the context requires otherwise.

Features, integers, characteristics, compounds, chemical moieties or groups described in conjunction with a particular aspect, embodiment or example of the invention are to be understood to be applicable to any other aspect, embodiment or example described herein unless incompatible therewith.

It will be appreciated by persons skilled in the art that embodiments of the invention are not limited by what has been particularly shown and described hereinabove. Rather the scope of at least one embodiment of the invention is defined by the claims below.

## Claims

1. A system comprising:
a sensor to sense a characteristic of a customer communication, said communication over an electronic medium;
a memory to store a plurality of methods of executing a process of said customer communication, said communication having said characteristic; and
a processor to:
select a preferred method from among said plurality of methods; and
direct an execution of said process using said preferred method.

2. The system as in claim 1, wherein said characteristic is selected from the group consisting of an identity of a party of said customer communication, a gender of said party, an emotion of said party, a time of a call of said customer communication, a location of said party, a request of said party, an age of said party, a preferred language of said party, an accent of said party, and an urgency of said party.

3. The system as in claim 1 or 2, wherein said processor is to:
record a first value of a parameter of said process, said process executed using a first of said plurality of methods;
record a second value of said parameter of said process, said process executed using a second of said plurality of methods;
compare said first value to said second value; and
designate as said preferred method, the method of said plurality of methods having a most favoured value of said parameter.

4. The system as in claim 3, wherein said processor is to direct executions of said process using said preferred method until a third method achieves a value of said parameter more favourable than said values achieved using said first method and said second method.

5. The system as in any preceding claim, wherein said first of said plurality of methods comprises an action performed by a person, and wherein said second of said plurality of methods comprises an action performed by a machine.

6. The system as in claim 5, wherein said processor is to direct said customer communication to said machine for an execution of said process, and to said person for execution of a second process.

7. The system as in any preceding claim, wherein said process comprises a plurality of sub-processes, and wherein said processor is to:
identify a sub-process of said plurality of sub-processes;
select a preferred method of performing said sub-process from among a plurality of methods of performing said sub-process; and
direct an execution of said sub-process using said preferred method of performing said sub-process.

8. The system as in any preceding claim, wherein said processor is to select said preferred method based on a parameter selected from the group consisting of a cost of a transaction of said customer communication, a success rate of a transaction in said customer communication, a satisfaction of a customer in said customer communication, an effectiveness of imparting data to said customer.

9. A method comprising:
sensing a characteristic of a customer communication, said communication over an electronic medium;
storing a plurality of methods of executing a process of said customer communication, said communication having said characteristic;
selecting a preferred method from among said plurality of methods; and
directing an execution of said process using said preferred method.

10. The method as in claim 9, wherein said sensing comprises sensing a characteristic selected from the group consisting of an identity of a caller of said customer communication, a gender of said caller, an emotion of said caller, a time of a call of said customer communication, a location of said caller, a request of said caller, an age of said caller, a preferred language of said caller, an accent of said caller, and an urgency of said caller.

11. The method as in claim 9 or 10, comprising:
recording a first value of a parameter of said process, said process executed using a first of said plurality of methods;
recording a second value of said parameter of said process, said process executed using a second of said plurality of methods;
comparing said first value to said second value; and
designating as said preferred method, the method of said plurality of methods having a most favoured value of said parameter.

12. The method as in claim 11, comprising directing an execution of said process using said preferred method until a third method achieves a value of said parameter more favourable than said values achieved using said first method and said second method.

13. The method as in any one of claims 9 to 12, wherein said storing said plurality of methods comprises storing a first method, said first method to be performed by a person, and storing a second method, said second method to be performed by a machine.

14. The method as in claim 13, wherein said directing comprises directing said customer communication to said machine for an execution of said process, and to said person for execution of a second process.

15. The method as in any one of claims 9 to 14, wherein said process comprises a plurality of sub-processes, and comprising:
identifying a sub-process of said plurality of sub-processes;
selecting a preferred method of performing said sub-process from among a plurality of methods of performing said sub-process; and
directing an execution of said sub-process using said preferred method of performing said sub-process.

16. The method as in any one of claims 9 to 15, wherein designating comprises designating on the basis of a parameter selected from the group consisting of a cost of a transaction of said customer communication, a success rate of a transaction in said customer communication, a satisfaction of a customer in said customer communication, and an effectiveness of imparting data to said customer.

17. A system comprising:
a memory to store a plurality of preferences for a response to a customer communication; and
a processor, said processor to:
transfer a customer communication from an automated response mode to a manual response mode upon a signal that said manual response mode complies with a preference of said plurality of preferences for said communication; and
transfer said customer communication from said automated response mode to said manual response mode upon a signal that said automated response mode complies with a preference of said plurality of preferences for said communication.

18. The system as in claim 17, wherein said processor is to:
record data collected in said automated response mode of said customer communication; and
present said data to a manual operator of said communication.

19. The system as in claim 17 or 18, wherein said plurality of said preferences comprises a preference of a customer of said customer communication, and wherein said processor is to identify said customer of said customer communication and apply said preference of said customer to said customer communication.

20. The system as in claim 19, wherein said processor is to collect a preference of said customer during said customer communication.

21. The system as in claim 19 or 20, wherein said processor is to identify said customer on the basis of a signal selected from the group consisting of a caller ID of said customer, a voice of said customer, a spoken name of said customer, a password of said customer.

22. The system as in any one of claims 17 to 21, wherein said signal is generated in response to a signal from said customer, said signal from said customer selected from the group consisting of a voice tone of said customer, a repeated use of a word by said customer during said customer communication, and a volume of a voice of said customer during said customer communication.

23. A method comprising:
storing a plurality of preferences for a response to a customer communication;
transferring a customer communication from an automated response mode to a manual response mode upon a signal that said manual response mode complies with a preference of said plurality of preferences for said communication; and
transferring said customer communication from said automated response mode to said manual response mode upon a signal that said automated response mode complies with a preference of said plurality of preferences for said communication.

24. The method as in claim 23, comprising:
recording data collected in said automated response mode of said customer communication; and
presenting said data to a manual operator of said communication.

25. The method as in claim 23 or 24, wherein storing said plurality of said preferences comprises storing a preference of a customer of said customer communication, and comprising identifying said customer of said customer communication and applying said preference of said customer to said customer communication.

26. The method as in any one of claims 23 to 25, comprising collecting a preference of said customer during said customer communication.

27. The method as in any one of claims 23 to 26, comprising identifying said customer on a basis of a signal selected from the group consisting of a caller ID of said customer, a voice of said customer, a spoken name of said customer, a password of said customer.

28. The method as in any one of claims 23 to 27, comprising generating said signal in response to a signal from said customer, said signal from said customer selected from the group consisting of a voice tone of said customer, a repeated use of a word by said customer during said customer communication, and a volume of a voice of said customer during said customer communication.
